# EUROPÄISCHE PATENTSCHRIFT

(11) **EP 1 022 317 B1**
(45) Veröffentlichungstag und Bekanntmachung des Hinweises auf die Patenterteilung: **15.10.2003**
(21) Anmeldenummer: 00100183.3
(22) Anmeldetag: 12.01.2000
(51) Int. Cl.: C09D 167/08

(54) **UV-härtende Bindemittel, sowie deren Verwendung zur Erzeugung hochglänzender Beschichtungen**
UV-hardenable binder and its use for generating high-gloss coating compositions
Liant réticulable par UV et son utilisation pour la production de compositions de revêtements à haute brillance

(30) Priorität: 22.01.1999 DE 19902403
(43) Veröffentlichungstag der Anmeldung: 26.07.2000
(73) Patentinhaber: Bayer Aktiengesellschaft, 51368 Leverkusen (DE)
(72) Erfinder: Weikard, Jan, Dr., 50670 Köln (DE); Fischer, Wolfgang, Dr., 40668 Meerbusch (DE); Müller, Manfred, 41066 Mönchengladbach (DE)

(56) Entgegenhaltungen:
- EP-A- 0 341 956
- DE-A- 19 604 185

## Beschreibung

Die Erfindung betrifft UV-härtende Bindemittel und deren Verwendung zur Herstellung einer durch UV-Licht initiierten in einer radikalischen Polymerisation härtbaren Beschichtung zur Erzeugung von hochglänzenden Oberflächen.

Es ist bekannt, daß sich zur Erzeugung von hochglänzenden Beschichtungen auf rauhen oder porösen Oberflächen wie z.B. auf Holz, ungesättigte Polyesterharze, besonders solche die in Styrol gelöst sind, eignen. Dabei werden paraffinhaltige und lufttrocknende (auch Glanzpolyester genannte) Typen unterschieden (Glasurit-Handbuch Lacke und Farben, Curt R. Vincentz Verlag, Hannover, 11. Auflage, 1984). Paraffinhaltige ungesättigte Polyester werden in dicken Schichten bis ca. 1 mm aufgetragen und nach der durch (Hydro)Peroxide und Metallsikkativen gestarteten Härtung meist geschliffen und auf Hochglanz poliert. Lufttrocknende ungesättigte Polyester können von sich aus hochglänzend härten, besitzen aber eine geringere Reaktivität als die paraffinhaltigen und 'sind zumeist nicht gut polierfähig. Lufttrocknende ungesättigte Polyesterharze können auch unter Verwendung von Photoinitiatoren unter UV-Licht gehärtet werden. Dies erhöht zwar die Härtungsgeschwindigkeit, doch lassen sich auch die so erhaltenen Oberflächen nur schlecht auf Hochglanz oder zu Reparaturzwecken polieren.

Wesentlich höhere Reaktivitäten als mit ungesättigten Polyestern lassen sich bei Härtung durch ultraviolette Strahlung bei Verwendung von ungesättigten Harzen auf Acrylatbasis erzielen (nach Glasurit Handbuch Lacke und Farben, Reaktivitätsunterschied Faktor 4 bis 5; nach W. Fischer, I-Lack 61, 2, 1993, 54 - 58, Reaktivitätsunterschied bis zu Faktor 35). Ungesättigte Acrylate weisen jedoch gegenüber den ungesättigten Polyestem die Nachteile auf, daß sie sich nur schwer spannungsfrei in dickeren Schichten härten lassen, nicht zufriedenstellend schleifbar sind und vor allem eine sehr schlechte Polierfähigkeit aufweisen. Es wurde versucht, die Polierfähigkeit von solchen Beschichtungen durch Zusatz elastischer Harze zu verbessern. Auf saugenden oder unebenen Untergründen wie Holz wurde dadurch jedoch ein sehr schlechtes Standvermögen (Haftung) der Lackierung beobachtet.

Aufgabe der Erfindung war es daher UV-härtende Bindemittel bereitzustellen und deren Verwendung zur Herstellung von hochglänzenden Beschichtungen, welche die Nachteile des Standes der Technik nicht aufweisen. Die erfindungsgemäßen Bindemittel zeichnen sich durch hohe Reaktivität bei der Härtung aus. Daraus hergestellte Beschichtungen haben gute Polierfähigkeit und Standvermögen und bilden hochglänzende Oberflächen.

Gegenstand der Erfindung sind durch UV-Licht initiierte radikalische Polymerisation härtbare Bindemittel aus
a) 90 bis 10 Gew.-Teile eines Polymeren, welches sowohl ethylenisch ungesättigte Gruppen als auch das Umsetzungsprodukt eines Abietinsäure-haltigen Harzes mit einem mehrfunktionellen Alkohol mit einem Molekulargewicht unter 500 bis zu einem Umsetzungsgrad von maximal 50 % der OH-Gruppen des mehrfunktionellen Alkohols chemisch gebunden enthält,
b) 10 bis 90 Gew.-Teile eines oder mehrerer Mono-, Di- oder Oligoester der (Meth)acrylsäure mit einem Molekulargewicht unter 800,
   gegebenenfalls
c) 0,1 bis 10 Gew.-Teile einer Photoinitiatorkomponente für die radikalische Polymerisation
   und gegebenenfalls
d) an sich bekannte Hilfs- und Zusatzmittel der Beschichtungstechnologie,
wobei sich die unter a) und b) genannten Gew.-Teile zu 100 ergänzen.

Bei der unter a) aufgeführten Alkoholkomponente, die mit einem Abietinsäure-haltigen Harz bis zu einem Grad von 50% der OH-Gruppen des Alkohols umgesetzt wird, handelt es sich um zwei-, drei- oder höherwertige Alkohole mit einem Molekulargewicht kleiner 500. Bevorzugt werden drei- oder höherwertige Alkohole eingesetzt, besonders bevorzugt dreiwertige Alkohole. Als zweiwertige Alkohole können beispielsweise Alkohole mit 2 bis 15 Kohlenstoffatomen wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol verwendet werden. Bevorzugte zweiwertige Alkoholc sind Ethylenglykol, Propandiol-1,2, Propandiol-1,3, Diethylenglykol und Dipropylenglykol. Als dreiwertige Alkohole kommen Alkohole mit 3 bis 20 Kohlenstoffatomen wie zum Beispiel Glycerin oder Trimethylolpropan oder deren alkoxylierte Derivate zum Einsatz. Besonders bevorzugt wird Trimethylolpropan. Als höherwertige Alkohole können Alkohole mit 4 bis 20 Kohlenstoffatomen wie zum Beispiel Pentaerythrit oder Ditrimethylolpropan oder deren alkoxylierte Derivate verwendet werden. Bevorzugt wird Pentaerythrit.

Als Abietinsäure-haltige Harze werden Kolophonium und seine säurehaltigen Derivate eingesetzt, insbesondere Balsamharze, Wurzelharze und Tallharze, bevorzugt werden Balsamharze verwendet. Solche Balsamharze werden nach ihren Herkunftsländern, beispielsweise Portugal oder USA, sowie nach ihrer Helligkeit mit AA, Y, X, W W, WG, N, M, K, I, H bezeichnet. Bevorzugt sind Harze hoher Helligkeit wie beispielsweise die Typen WG, WW oder X. Besonders bevorzugt wird Portugiesisches Balsamharz WW. Als Wurzelharz wird beispielsweise das Produkt Tenex (Hersteller: Bergvik Kemi AB, Sandarne, Schweden) verwendet. Als Tallharze kommen beispielsweise Produkte wie Beviros SG (Hersteller: Bergvik Kemi AB, Sandame, Schweden), Acintol R-S (Hersteller: Bergvik Kemi AB, Sandame, Schweden), Sacotan 85 (Hersteller: Krems Chemie, Krems, Österreich), Oulo 331 (Hersteller: Veitsiluoto Oy, Oulu, Finnland), Petrosin 90 (Hersteller: Peterson A/S, Greaker, Norwegen), Unitol NCY (Hersteller: Union Camp Chemicals, Durham, UK) und Valke Tallharz A (Hersteller: Valks Chemicals, Valkeakoski, Finnland) in Frage.

Bei der Umsetzung des Abietinsäure-haltigen Harzes mit dem mehrfunktionellen Alkohol handelt es sich um eine Kondensationsreaktion. Diese Reaktion wird bevorzugt bei erhöhten Temperaturen von 100 - 250°C, bevorzugt 140 bis 220°C unter Abdestillieren von Reaktionswasser durchgeführt bis zu einer Säurezahl der Reaktionsmischung von unter 15 mg KOH / g Substanz, bevorzugt von unter 10 mg KOH/g Substanz. Es ist weiterhin möglich, das Reaktionswasser durch ein geeignetes Lösungsmittel als Azeotrop abzudestillieren. Das Lösungsmittel wird nach Ende der Reaktion (Säurezahl der Reaktionsmischung < 10 mg KOH / g Substanz) bevorzugt unter vermindertem Druck abdestilliert. Solche Lösungsmittel sind beispielsweise Toluol, Xylole, aliphatische oder cycloaliphatische Kohlenwasserstoffe, bevorzugt wird Toluol.

In einer Variante des Verfahrens ist zusätzlich noch ein Veresterungskatalysator anwesend. Solche Katalysatoren sind dem Fachmann bekannt; es handelt sich beispielsweise um starke anorganische Säuren wie Schwefelsäure oder Phosphorsäure oder um starke organische Säuren wie p-Toluolsulfonsäure oder Chlorameisensäure. Um bei der Umsetzung unerwünschte, vorzeitige Polymerisation sowie unerwünschte, stärkere Verfärbung zu verhindern, empfiehlt es sich, dem Reaktionsgemisch 0,01 bis 0,3 Gew.-% bezogen auf das Gesamtgewicht der Reaktanden von an sich bekannten Polymerisationsinhibitoren oder Antioxidantien hinzuzufügen. Geeignete derartige Zusatzmittel sind z.B. in "Methoden der organischen Chemie" (Houben-Weyl), 4. Auflage, Band XIV/1, S. 433ff, Georg Thieme Verlag, Stuttgart 1961, beschrieben.

In einer bevorzugten Variante des Verfahrens wird ein sauerstofffreies Gas, bevorzugt Stickstoff, über die Reaktionsmischung geleitet, um unerwünschte Reaktionen mit Sauerstoff zu verhindern.

Bei dem Polymeren nach Teil a) handelt es sich um Polymere, in die das oben beschriebene Umsetzungsprodukt eines Abietinsäure-haltigen Harzes mit einem mehrfunktionellen Alkohol eingebaut wurde und das weiterhin noch ethylenisch ungesättigte Gruppen besitzt. Bei diesen Polymeren handelt es sich um an sich bekannte Polymere für die Strahlenhärtung, die als Aufbaukomponenten OH-funktionelle Moleküle enthalten. Solche Polymere sind beispielsweise beschrieben in P. K. T. Oldring (Ed.), Chemistry & Technology of UV & EB Formulations For Coatings, Inks & Paints, Vol. 2, 1991, SITA Technology, London, S. 31 - 235. Als Beispiele seien genannt Urethanacrylate, Polyesteracrylate, Polyetheracrylate und ungesättigte Polyester. Bevorzugt werden Polyesteracrylate und ungesättigte Polyester, besonders bevorzugt sind ungesättigte Polyester auf Basis von Maleinsäure und/oder Fumarsäure. Die Herstellung dieser Polymere wird nun für das erfindungsgemäße Verfahren derart modifiziert, daß 1 bis 90 mol-% (bezogen auf OH), bevorzugt 5 bis 50 mol%, besonders bevorzugt 10 mol% der eingesetzten OH-Komponenten durch das beschriebene Umsetzungsprodukt eines Abietinsäure-haltigen Harzes mit einem mehrfunktionellen Alkohol ersetzt wird.

Bei den unter b) aufgeführten Mono-, Di- oder Oligoestem der (Meth)acrylsäure handelt es sich um an sich in der Beschichtungstechnologie bekannte Verbindungen, die als Reaktivverdünner bezeichnet werden und als bei Härtung einpolymerisierende Verbindungen die Viskosität des ungehärteten Lackes senken sollen. Solche Verbindungen sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Bevorzugt wird propoxyliertes Glycerin. Als mehrwertige Alkohole können Alkohole wie Pentaerythrit oder Ditrimethylolpropan oder deren alkoxylierte Derivate verwendet werden.

Die unter c) genannte Photoinitiatorkomponente umfaßt an sich bekannte Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61 - 325. Sie werden als Zusatz zu den unter a) und b) genannten Komponenten in Mengen von 0,1 bis 10 Gew.-Teilen, bevorzugt 2 bis 7 Gew.-Teilen, besonders bevorzugt 3 bis 4 Gew.-Teilen verwendet.

Die erfindungsgemäßen Beschichtungsmittel können mit Hilfs- und Zusatzmitteln d) der unterschiedlichsten Art abgemischt werden. Hierzu gehören Füllstoffe, Pigmente, Farbstoffe, Thixotropiermittel, Glättmittel, Mattierungsmittel oder Verlaufsmittel, die in den üblichen Mengen eingesetzt werden.

Weiterhin können die erfindungsgemäßen Beschichtungsmittel als Alleinbindemittel oder in Abmischung mit anderen durch Strahlung härtbaren Bindemitteln angewandt werden.

Ein weiterer Gegenstand der Erfindung ist die Verwendung der erfindungsgemäßen Bindemittel zur Herstellung UV-härtender hochglänzender Beschichtungen.

### Beispiele:

### Beispiel 1

### Abietinsäure-haltige Vorstufe:

In einen 15-l- Rührkessel mit Destillationsaufsatz werden 10,26 kg Portugiesisches Balsamharz WW, 4,02 kg Trimethylolpropan und 0,007 kg Toluhydrochinon eingewogen und 30 Minuten Stickstoff (30 - 40 l/h) übergeleitet. Der Stickstoffstrom wird auf 8 -10 l/h reduziert, und es wird auf 120 - 130°C geheizt. Wenn das Harz geschmolzen ist, wird der Rührer eingschaltet. Anschließend innerhalb von 2 h auf 140°C heizen und dann folgende Temperaturen einhalten: 1 h 140°C, 1 h 150°C, 1h 160°C, 1 h 170°C, 1 h 180°C, 1h 200°C, 1 h 220°C, dann Stickstoffstrom auf 20 l/h erhöhen und auf 230°C heizen. Bei dieser Temperatur rühren, bis Säurezahl kleiner ist als 10 mg KOH pro g Substanz.

Nach Erreichen der Säurezahl auf 100°C abkühlen und heiß in eine Schale ablassen. Nach dem Erstarren Harz grob zerkleinern.

### Beispiel 2

### Ungesättigter Polyester mit Abietinsäure-haltiger Vorstufe:

In einen 15-l-Rührkessel mit Destillationsaufsatz 3,59 kg Abietinsäure-haltige Vorstufe einwiegen und unter Durchleiten von Stickstoff (30 -40 l/h) auf 120°C erwärmen. Nach Schmelzen des Harzes Rührer anstellen und 3,19 kg Ethylenglykol, 2,76 kg Trimethylolpropandiallylether, 5,49 kg Maleinsäureanhydrid und 0,007 kg Toluhydrochinon zugeben. Temperatur innerhalb von 5 h auf 180°C erhöhen. Die Kopftemperatur darf 102°C nicht übersteigen. Bei dieser Temperatur halten, bis die Säurezahl kleiner 20 mg KOH pro g Substanz ist, dann auf 105°C abkühlen und erst 0,021 kg Toluhydrochinon sowie 0,0004 kg 2,5-Ditert.butylchinon dann 6,01 kg Dipropylenglykoldiacrylat zugeben.

Das Produkt besitzt eine Säurezahl von 14 mg KOH / g Substanz, eine Iod-Farbzahl von 9 und eine Viskosität von 12 Pa s bei 23°C.

### Beispiel 3

### Vergleich: Ungesättigter Polyester mit Abietinsäure-haltiger Vorstufe in Styrol:

Beispiel 2 wird wiederholt mit dem Unterschied, daß statt 6,01 kg Dipropylenglykoldiacrylat jetzt 6,01 kg Styrol verwendet werden.

### Beispiel 4

### Vergleich: Ungesättigter Polyester ohne Abietinsäure-haltige Vorstufe:

In einen 15-l-Rührkessel mit Destillationsaufsatz 4,66 kg Maleinsäureanhydrid, 4,13 kg Diethylenglykol, 1,35 kg Trimethylolpropandiallylether, 0,72 kg 1,2-Propandiol und 0,001 kg Toluhydrochinon einwiegen und unter Durchleiten von Stickstoff (20 bis 30 l/h) auf 180°C erwärmen. Nach Schmelzen des Harzes Rührer anstellen. Bei dieser Temperatur 10 Stunden halten, dann auf 140°C abkühlen und so lange bei dieser Temperatur rühren, bis die Säurezahl kleiner 25 mg KOH pro g Substanz ist, dann auf 105°C abkühlen und erst 0,021 kg Toluhydrochinon sowie 0,0004 kg 2,5-Di-tert.butylchinon dann 3,33 kg Dipropylenglykoldiacrylat zugeben.

Das Produkt besitzt eine Säurezahl von 24 mg KOH / g Substanz, eine Iod-Farbzahl von 3 und eine Viskosität von 2 Pa s bei 23°C.

### Beispiel 5

### Vergleich: Polyesteracrylat:

Die Rohstoffe 2,18 kg Adipinsäure, 1,48 kg Phthalsäure, 3,17 kg Diethylenglycol, 1,67 kg Trimethylolpropan und 0,003 kg Fascat® 4100 einwiegen, einfaches Kesselvolumen pro Stunde Stickstoff einleiten, auf 160°C heizen (ab ca. 80°C unter Rühren). In ca. 4 Stunden von 160°C auf 190°C heizen, 190°C halten bis die Säurezahl ≤ 10 mg KOH / g Substanz.

Umbau der Apparatur zur Azeotropdestillation. Einfaches Kesselvolumen pro Stunde Luft durchleiten, doppeltes Kesselvolumen pro Stunde Stickstoff überleiten. 4,20 kg Isooctan, 2,69 kg Acrylsäure, 0,075 kg para-Toluolsulfonsäure, 0,30 kg para-Methoxyphenol, 0,002 kg 2,5-Di-tert-butylhydrochinon zugeben, unter Rühren auf Rückflußtemperatur aufheizen (ca. 90 - 105°C) und starken Rückfluß halten, bis eine Säurezahl ≤ 3 mg KOH / g Substanz erreicht ist. Abkühlen auf 50°C, Umbau zur Destillation. 0,21 kg Glycidylmethacrylat zugeben, bei 50°C langsam Vakuum anlegen und Lösemittel abdestillieren, bis bei ca. 90°C und Vakuum (≤ 50 mbar) nichts mehr übergeht. Temperatur und Vakuum 10 Minuten halten. Belüften und abkühlen auf 60°C. Bei 90°C unter Durchleiten von Luft und Überleiten von Stickstoff so lange rühren, bis die Säurezahl ≤ 1 mg KOH / g Substanz. Das resultierende Produkt besitzt eine Viskosität von 7 Pa s bei 23°C und eine Iodfarbzahl von 1-2.

### Beispiel 6

### Herstellung der Beschichtungsmittel, Härtung und Prüfung der Beschichtungen

Die nach Beispiel 2, 3, 4 und 5 hergestellten Polyesterharze werden mit Dipropylenglycoldiacrylat (DPGDA) (Bsp. 2, 4, 5) bzw. Styrol (Bsp. 3) auf eine Auslaufviskosität von 6 s / DIN-Becher 4 eingestellt und mit 3 Gew.% Photoinitiator Phenyl-2-hydroxy-2-propylketon versetzt. Die so formulierten Lacke werden mittels Gießauftrag in Auftragsmengen von 300 g/m² auf das Substrat (Nußbaumholz mit einer Grundierung basierend auf dem Ungesättigten Polyester Roskydal® 300/1 (Fa. Bayer AG), UV-gehärtet und geschliffen) appliziert.

Es wird 0,5 min bei 23°C abgelüftet und anschließend mit Hg-Dampf-Hochdruckstrahlern (80 W / cm) derart gehärtet, daß harte, kratzfeste und gut haftende Beschichtungen entstehen. Die dabei mögliche maximale Bandgeschwindigkeit ist ein Maß für die Reaktivität des Beschichtungsmittels.

Die Beschichtungen werden 16 Stunden bei 23°C gelagert. Anschließend wird zur Überprüfung der Schleifbarkeit zuerst mit 320er Schleifpapier (Si-Carbid, wasserfest) vor- und mit 500er Schleifpapier (Si-Carbid, wasserfest) nachgeschliffen. Es wird der Abbau der Beschichtung und das Zusetzen des Schleifpapiers bewertet.

Zur Überprüfung der Polierfähigkeit werden die Oberflächen am Polierbock mit Lammfellscheiben und unter Zusatz eines feinkörnigen Stangenwachses (Fa. Menzerna, Karlsruhe) poliert, bis maximaler Glanz erreicht ist.

Die Ergebnisse sind in folgender Tabelle zusammengefaßt:

| | Bandgeschwindigkeit bei der UV-Härtung | Schleifbarkeit | Glanzgrad nach Polieren (20°) | Polierzeit |
|---|---|---|---|---|
| Bsp. 2, erfindungsgemäß Unges. Polyester mit Harz aus Bsp. 1 in DPGDA | 4 m / min | sehr gut | 80 | 2 min |
| Bsp. 3, Vergleich Unges. Polyester mit Harz aus Bsp. 1 in Styrol | 1 m / min | sehr gut | 70 | 2 min |
| Bsp. 4, Vergleich Unges. Polyester in DPGDA | 4 m / min | sehr gut | 15 | 5 min |
| Bsp. 5, Vergleich Polyesteracrylat | 4 m/min | befriedigend | 60 | 5 min |

## Patentansprüche

1. Durch UV-Licht initiierte radikalische Polymerisation härtbare Bindemittel aus
a) 90 bis 10 Gew.-Teile eines Polymeren, welches sowohl ethylenisch ungesättigte Gruppen als auch das Umsetzungsprodukt eines Abietinsäure-haltigen Harzes mit einem mehrfunktionellen Alkohol mit einem Molekulargewicht unter 500 bis zu einem Umsetzungsgrad von maximal 50 % der OH-Gruppen des mehrfunktionellen Alkohols chemisch gebunden enthält,
b) 10 bis 90 Gew.-Teile eines oder mehrerer Mono-, Di- oder Oligoester der (Meth)acrylsäure mit einem Molekulargewicht unter 800,
gegebenenfalls
c) 0,1 bis 10 Gew.-Teile einer Photoinitiatorkomponente für die radikalische Polymerisation
und gegebenenfalls
d) an sich bekannte Hilfs- und Zusatzmittel der Beschichtungstechnologie,
wobei sich die unter a) und b) genannten Gew.-Teile zu 100 ergänzen.

2. Bindemittel nach Anspruch 1, **dadurch gekennzeichnet, daß** das Polymer ein ungesättigter Polyester ist.

3. Bindemittel nach Anspruch 1, **dadurch gekennzeichnet, daß** das Abietinsäure-haltige Harz Kolophonium ist.

4. Verwendung der Bindemittel nach Anspruch 1 zur Herstellung strahlungshärtbarer hochglänzender Lacke und Beschichtungen.

## Claims

1. Binders, which can be cured by free-radical polymerization initiated by UV light, of
a) 90 to 10 parts by wt. of a polymer which contains, in chemically bonded form, both ethylenically unsaturated groups and the reaction product of a resin containing abietic acid with a polyfunctional alcohol with a molecular weight of less than 500 up to a degree of conversion of not more than 50% of the OH groups of the polyfunctional alcohol,
b) 10 to 90 parts by wt. of one or more mono-, di-or oligoesters of (meth)acrylic acid with a molecular weight of less than 800,
optionally
c) 0.1 to 10 parts by wt. of a photoinitiator component for the free-radical polymerization
and optionally
d) auxiliary substances and additives of coating technology which are known per se,
the parts by wt. mentioned under a) and b) adding up to 100.

2. Binders according to claim 1, **characterized in that** the polymer is an unsaturated polyester.

3. Binders according to claim 1, **characterized in that** the resin containing abietic acid is colophony.

4. Use of the binders according to claim 1 for the production of high-gloss paints and coatings which can be cured by radiation.

## Revendications

1. Liants durcissables par polymérisation radicalaire induite à la lumière UV, consistant en
a) 90 à 10 parties en poids d'un polymère qui contient à la fois, à l'état chimiquement combiné, des groupes à insaturation éthylénique et le produit de réaction d'une résine contenant de l'acide abiétique avec un alcool polyfonctionnel de poids moléculaire inférieur à 500 jusqu'à un taux de conversion de 50 % au maximum des groupes OH de l'alcool polyfonctionnel,
b) 10 à 90 parties en poids d'un ou plusieurs mono-, di- ou oligoesters de l'acide (méth)acrylique à un poids moléculaire inférieur à 800,
le cas échéant
c) 0,1 à 10 parties en poids d'un composant photo-inducteur pour la polymérisation radicalaire
et le cas échéant
d) des produits auxiliaires et additifs connus en soi dans l'industrie des revêtements,
les quantités indiquées en parties en poids sous a) et b) représentant au total 100 parties en poids.

2. Liants selon la revendication 1, **caractérisés en ce que** le polymère est un polyester insaturé.

3. Liants selon la revendication 1, **caractérisés en ce que** la résine contenant de l'acide abiétique est de la colophane.

4. Utilisation des liants selon la revendication 1 pour la préparation de vernis durcissables sous l'action de radiations et l'application de revêtements à haut brillant.
